# EUROPÄISCHE PATENTSCHRIFT

(11) **EP 0 545 234 B1**
(45) Veröffentlichungstag und Bekanntmachung des Hinweises auf die Patenterteilung: **14.02.1996**
(21) Anmeldenummer: 92120023.4
(22) Anmeldetag: 25.11.1992
(51) Int. Cl.: G02F 1/1337, G02F 1/1333

(54) **Mikromechanisches Verfahren zur Strukturierung einer Polymer-Orientierungsschicht**
Micro-mechanical method of structuring a polymer alignment layer
Procédé micromécanique de structuration d'une couche polymérique d'alignement

(30) Priorität: 05.12.1991 CH 3570/91
(43) Veröffentlichungstag der Anmeldung: 09.06.1993
(73) Patentinhaber: F. HOFFMANN-LA ROCHE AG, CH-4002 Basel (CH)
(72) Erfinder: Fünfschilling, Jürg, 4054 Basel (CH); Grütter, Peter, 4055 Basel (CH); Hug, Hans-Josef, 4133 Pratteln (CH); Jung, Thomas, 4053 Basel (CH); Schwarz, Udo, 4056 Basel (CH)
(74) Vertreter: Buntz, Gerhard

(56) Entgegenhaltungen:
- EP-A- 249 311
- WO-A-90/15986
- DE-A- 3 234 074
- US-A- 3 963 310
- MOLECULAR CRYSTALS AND LIQUID CRYSTALS Bd. 23, Oktober 1973, GB Seiten 187-196; U. WOLFF et al.: "The homogeneous alignment of liquid crystal layers"
- IBM JOURNAL OF RESEARCH AND DEVELOPMENT Bd. 30, Nr. 5, September 1986, ARMONK, US, Seiten 500-507; M. RINGGER et al.: "STM Activity at the University of Basel"
- IBM TECHNICAL DISCLOSURE BULLETIN Bd. 33, Nr. 1B, Juni 1990, ARMONK, US, Seiten 199-200; 'CONTROLLED TWO- AND FOUR-DOMAIN TWISTED NEMATIC LIQUID CRYSTAL DISPLAYS'
- PATENT ABSTRACTS OF JAPAN vol. 7, no. 42 (P-177)(1187) 19. Februar 1983 & JP-A-57 192 926
- APPLIED OPTICS Bd. 25, Nr. 15, August 1986, NEW YORK, US, Seiten 2469-2470; M. A. EL-SHERIF et al.: 'ON-FIBER ELECTROOPTIC MODULATOR/SWITCH'

## Beschreibung

Die Erfindung betrifft ein mikromechanisches Verfahren zur Strukturierung einer Polymer-Orientierungsschicht, die sich auf einer Platte befindet und durch Reiben in einer Vorzugsrichtung orientiert ist.

Als Feinstrukturen werden für den Zweck dieser Beschreibung Flächen- bzw. Volumenausdehnungen in der Grössenordnung von 0,1 bis ca. 100 µm bezeichnet.

Es ist bekannt, derartige Feinstrukturen in Flüssigkristallschichten durch Anlegen eines elektrischen Feldes an entsprechend segmentierte Elektroden zu erzeugen. In dem Bereich, der dem elektrischen Feld ausgesetzt ist, wird die Orientierung des Flüssigkristalls gegenüber den umgebenden feldfreien Bereichen geändert. Dies hat in der Regel eine Aenderung der optischen Eigenschaften des betreffenden Bereiches zur Folge und ist daher die Grundlage der elektro-optischen Anzeigeeffekte von Flüssigkristallzellen.

Es ist ferner bekannt, Feinstrukturen in Flüssigkristallschichten zu erzeugen, die im Feldfreien Zustand ausgebildet sind. Dies wird dadurch erreicht, dass die Wandorientierung der Flüssigkristallmoleküle durch orientierte Photopolymere erfolgt. Durch unterschiedliche Molekülausrichtung können Orientierungsmuster im Flüssigkristall erzeugt werden (vgl. schweizerische Patentanmeldungen Nr. 2244/91, 2245/91 und 2246/91 vom 26. Juli 1991; 2244/91 entspricht EP-A-525 477, 2245/91 entspricht EP-A-525 473 und 2246/91 entspricht EP-A-525 478).

Aus der DE-A-3 234 074 ist eine Flüssigkristallzelle bekannt, in welcher eine der zwei Platten Bereiche besitzt, die angrenzende Flüssigkristallmoleküle in verschiedenen Vorzugsrichtungen orientieren. Somit gibt es Bereiche, in denen die Flüssigkristallmoleküle anders orientiert sind, als in der restlichen Flüssigkristallschicht. Die Bereiche der Orientierungsschicht können durch Stempelprägen strukturiert werden.

In der Publikation "The Homogenous Alignment of Liquid Crystal Layers" von U. Wolff, W. Greubel und H. Krüger, ist ein Verfahren zur Herstellung von Flüssigkristallzellen beschrieben, bei dem ein bestimmter Flächenbereich der Glasplatte mechanisch mittels einer bewegten Schreibspitze in eine einheitliche Richtung strukturiert wird.

Aus der EP-A-0 249 311 sind Flüssigkristallzellen bekannt, in denen streifenförmige Lichtleiter ausgebildet sind. Die Lichtausbreitung erfolgt also parallel zu den die Flüssigkristallschicht begrenzenden Platten. Die Lichtleitung zu beiden Seiten des Streifens wird durch den Unterschied der Brechungsindizes zwischen den unterschiedlich orientierten Volumenbereichen des Flüssigkristalls und auf der Unterseite durch den niedrigeren Brechungsindex des Glases bewirkt.

Erfindungsgemäss zeichnet sich die mikromechanische Strukturierung dadurch aus, dass die eingangs erwähnte Polymerschicht, nachdem sie durch Reiben in eine Vorzugsrichtung orientiert wurde, anschliessend mindestens ein Flächenbereich der orientierten Polymer-Schicht, von dem mindestens eine Seitenausdehnung in der Grössenordnung von 0.1 bis ca. 100 µm liegt, mechanisch mittels einer piezoelektrisch bewegten Schreibspitze mit einer Struktur aus parallel zueinander verlaufenden Vertiefungen versehen wird.

Mit diesem Verfahren hergestellte Orientierungsmuster können beispielsweise dazu dienen, Flüssigkristallzellen herzustellen, in denen Muster aus Bereichen mit unterschiedlichen Vorzugsorientierungen, Muster aus Bereichen mit und ohne Vorzugsorientierung, oder Muster aus Bereichen unterschiedlicher Verdrillung, also auch Muster aus TN- und STN-Bereichen, verwirklicht sind.

Mit den erfindungsgemäss hergestellten Feinstrukturen lassen sich auchauf verhältnismässig einfache Weise Lichtleiter verwirklichen. Bekanntlicht ist die Voraussetzung für Lichtleitung Totalreflexion an den Randflächen des Lichtleiters, d.h. dass sich diese Randflächen durch eine Aenderung des Brechungsindex von einem höheren Wert im Inneren des Lichtleiters zu einem tieferen ausserhalb desselben auszeichnen.

Flüssigkristalle haben Eigenschaften, die für die Herstellung von Lichtleiterstrukturen interessant sind: Sie besitzen eine hohe optische Anisotropie, ihre Orientierung lässt sich durch Randbedingungen steuern, und sie zeigen enorme elektrooptische Effekte im quasi-statischen Betrieb. Einige neu entwickelte ferroelektrische Flüssigkristalle haben zudem eine grosse optische Nichtlinearität. Im weiteren lassen sich mit Flüssigkristallen auf einfache Art dünne Schichten herstellen.

Mit konventionellen (nematischen) Flüssigkristallen kann man damit langsame (statische) Schaltnetzwerke herstellen. Benutzt man aber ferroelektrische Flüssigkristalle, so sind auch extrem kurze Schaltzeiten (« 1 ns via Pockelseffekt) realisierbar. In lichtführenden Strukturen bleibt zudem die Lichtenergie auf kleinstem Volumen konzentriert, so dass effiziente Frequenz-Verdoppelung und -Mischung möglich werden.

Im folgenden wird anhand der beiliegenden Zeichnungen ein Ausführungsbeispiel der Erfindung beschrieben.

Es zeigen
Fig. 1 eine schematische Darstellung einer Flüssigkristallzelle mit unterschiedlich orientierten Bereichen.
Fig. 2 eine schematische Darstellung einer Vorrichtung zum "Einschreiben" von Mikrostrukturen.

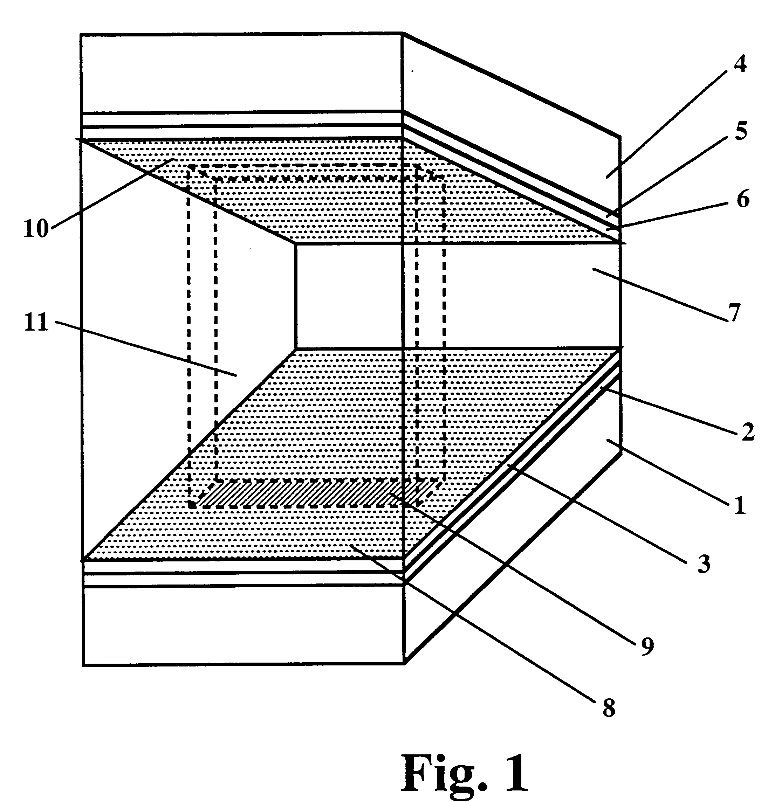

Die in Fig.1 gezeigte Flüssigkristallzelle besteht aus zwei parallelen, im Abstand voneinander angeordneten Glasplatten 1, 4. Die untere Glasplatte 1 ist mit einer ITO-Elektrodenbeschichtung 2 versehen, die mit einer Orientierungsschicht 3 aus einem Polymer bedeckt ist. In gleicher Weise ist die obere Glasplatte 4 mit einer ITO-Elektrodenbeschichtung 5 und mit einer Polymer-Orientierungsschicht 6 versehen. Im Raum zwischen den beiden Platten befindet sich eine nematische Flüssigkristallschicht 7.

Die Polymerschicht 3 besitzt auf dem grössten Teil ihrer Fläche eine Oberflächenstrukturierung 8, die die angrenzenden Moleküle des Flüssigkristalls 7 in die durch die gestrichelten Linien 8 angegebene Richtung orientiert. Die Polymerschicht 6 der oberen Platte 4 besitzt eine dazu parallele Oberflächenstruktur 10. Die parallele Ausrichtung der Wandorientierungen der beiden Platten bewirkt in an sich bekannter Weise die einheitliche Ausrichtung des gesamten Flüssigkristalls 7. Diese Struktur des Flüssigkristalls wird als homogen oder planar bezeichnet.

In dieser homogen in einer Richtung orientierten Flüssigkristallschicht ist nun gemäss der Erfindung ein einige µm breiter Streifen einer anderen Orientierung vorhanden, der gemäss der Erfindung auf folgende Weise erzeugt wird: In einem bestimmten begrenzten Flächenbereich 9 der unteren Platte 1 ist die Polymerschicht 3 in eine von der übrigen Fläche verschiedene Richtung, beispielsweise im rechten Winkel zur Orientierung 8, strukturiert. Die an diesen Flächenbereich 9 angrenzenden Flüssigkristallmoleküle werden durch die Wandorientierungskräfte in diese abweichende Richtung ausgerichtet.

Wegen der kooperativen Wechselwirkungskräfte der Flüssigkristallmoleküle untereinander erstreckt sich diese abweichende Ausrichtung in das Flüssigkristallvolumen hinein. Die Wandorientierung an der gegenüberliegenden Seite, d.h. an der oberen Platte, ist nicht geändert , also parallel zur Richtung 8. Somit ergibt sich in dem durch die Fläche 9 definierten Volumenbereich 11, der durch die gestrichelten Linien angedeutet ist, eine verdrillte Molekülanordnung (TN- oder Drehzellenkonfiguration). Dieser streifenförmige Bereich 11 wirkt als Lichtleiter, wobei die Lichtleitung zu beiden Seiten des Streifens durch den definierten Unterschied der Brechungsindizes zwischen den unterschiedlich orientierten Volumenbereichen des Flüssigkristalls und auf der Unterseite durch den niedrigeren Brechungsindex des Glases bewirkt wird. Nach oben ergibt sich durch die verdrillte Molekülanordnung ein Brechungsindexgradient, der für die Lichtführung verantwortlich ist. Je nach der Schichtdicke des Flüssigkristalls wirkt sich aber auch oben die Lichtführung durch die Glasplatte noch aus.

Alternativ wäre es möglich die Polymerschicht der oberen Platte 4 ebenfalls mit einer der Fläche 9 entsprechenden abweichenden Feinstruktur zu versehen. Falls die beiden einander gegenüberliegenden feinstrukturierten Flächen zueinander parallele Orientierungsrichtungen besitzen, ist der entsprechende Volumenbereich 11 einheitlich ausgerichtet, d.h. uniaxial.

Eine andere Alternative besteht darin, die generelle Wandorientierung an einer oder an beiden Platten homöotrop statt planar vorzusehen. Auch die homöotrope Molekülanordnung weist einen niedrigeren Brechungsindex auf als der Volumenbereich 11.

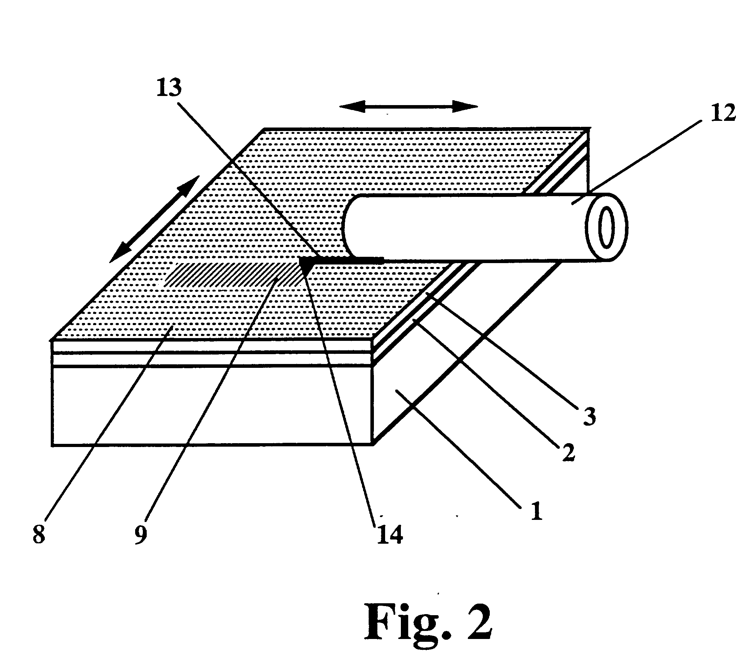

Die Strukturierung der Fläche 9 erfolgt beispielsweise auf folgende Weise mit der in Fig. 2 gezeigten Vorrichtung. Die Platte 1, deren Polymerschicht 3 vorher bereits durch Reiben in die Vorzugsrichtung 8 orientiert wurde, ist in die beiden durch die Doppelpfeile angedeuteten Richtungen verschiebbar angeordnet. Ueber der Platte befindet sich eine mittels einer Feder 13 an einem Piezo-Röhrchen 12 angebrachten Schreibstift 14. Diese Anordnung entspricht der an sich bekannten Abtasteinrichtung eines Raster-Kraft-Mikroskopes.

Durch die elektrische Ansteuerung des Piezo-Röhrchens 12 wird der Schreibstift 14 wahlweise in eine Bewegung in jede gewünschte Richtung versetzt. Der Schreibstift kann, wie im vorliegenden Beispiel einfach im rechten Winkel zur Bewegungsrichtung der Platte 1 über die Polymerschicht 3 hin- und hergezogen werden, während die Platte 1 langsam in Richtung der vorhandenen Orientierung 8 verschoben wird. Die Andruckskraft des Schreibstiftes 14 kann ähnlich wie in dem erwähnten Raster-Kraft-Mikroskop kontrolliert werden.

Die Bewegung des Schreibstiftes 14 in Berührung mit der Polymerschicht 3 bewirkt deren Strukturierung, die man sich als feine Liniengravur vorstellen kann, wobei die Linien in der Bewegungsrichtung des Schreibstiftes verlaufen. Je nach der Geschwindigkeit, mit der die Platte bewegt wird, ergibt sich ein grösserer oder kleinerer Linienabstand, der typischerweise im nm-Bereich liegt.

Der Schreibstift 14 kann auch unter einem von 90° verschiedenen Winkel ϕ zur Bewegung der Platte 1 über die Polymerschicht bewegt werden, so dass die Strukturlinien unter diesem Winkel ϕ zur Orientierung 8 verlaufen. Diese "schräge" Strukturierung ist beispielsweise sinnvoll bei Verwendung von S_{c}-Material, dessen Moleküle sich schräg zur Wandorientierung stellen. Durch Strukturierung unter dem entsprechenden Winkel ergibt sich eine exakt quergestellte Molekülausrichtung im Volumenbereich 11.

Andererseits kann durch gezielte Schrägstellung der Moleküle im Volumenbereich 11 der Brechungsindex des Flüssigkristalls variiert werden. Dies ist beispielsweise zur Phasenanpassung bei der Anwendung zur Frequenzverdoppelung nützlich.

Auch der Kippwinkel der Flüssigkristallmoleküle kann durch die Strukturierung beeinflusst werden. Wenn alle Linien vom Schreibstift 14 in dieselbe Richtung gezogen werden, indem der Schreibstift nur in einer Richtung die Oberfläche berührt und für die Rückwärtsbewegung abgehoben wird, ergibt sich eine Linienstruktur die eine Kippung der Moleküle bewirkt.

Das Einkoppeln des Lichtes in den lichtleitenden Volumenbereich kann in an sich bekannter Weise mittels eines Interferenzgitters (nicht gezeigt) erfolgen. Dies gilt ebenfalls für das Auskoppeln des Lichtes. Solche Gitter können durch geeignete Wahl der Parameter für die Strukturierung ebenfalls mit dem Schreibstift erzeugt werden. Auch das bekannte Prägen von Gittern ist geeignet.

Anstelle von nematischen können mit Vorteil auch andere , beispielsweise ferroelektrische Flüssigkristalle, eingesetzt werden. Mit nematischen Flüssigkristallen erhält man statische bzw. elektrooptisch langsamere Bauteile. Für schnelle elektrooptische Schaltvorgänge eignen sich vorzugsweise ferroelektrische Flüssigkristalle und zwar insbesondere solche mit hoher optischer Nichtlinearität, die bei Zimmertemperatur glasförmig eingefroren sind.

Die Elektrodenschichten 2, 5 auf den beiden Platten 1, 4 können je nach Anwendung der Zellen in geeigneter Weise segmentiert sein.

Mit dem beschriebenen Prinzip lassen sich auch kompliziertere Strukturen wie Mach-Zehnder Interferometer herstellen. In Kombination mit den grossen elektrooptischen Effekten in Flüssigkristallen ist dann der Weg zur integrierten Optik mit komplexen Schaltnetzwerken offen.

Ausser der Herstellung von Lichtleitern kann die erfindungsgemässe Feinstrukturierung auch zur Herstellung von Flüssigkristallanzeigezellen verwendet werden, wie sie ähnlich in der eingangs erwähnten schweizerischen Patentanmeldung 2246/91 vom 26.Juli 1991 beschrieben sind. Besonders eine Zelle ähnlich der dort beschriebenen mit schachbrettartig nebeneinander angeordneten Volumenbereichen mit unterschiedlicher Molekülkonfiguration lässt sich mit dem erfindungsgemässen Verfahren vorteilhaft herstellen. Zu diesem Zweck wird die Polymerschicht 3 der Platte 1 mit schachbrettartig angeordneten, mikromechanisch mit unterschiedlichen Orientierungsrichtungen strukturierten Flächenbereichen versehen. Die gegenüberliegende Platte kann entweder in gleicher Weise strukturiert sein oder so behandelt sein, dass sie den Flüssigkristall homöotrop orientiert. Der Flüssigkristall weist durch diese Wandorientierung(en) entsprechend unterschiedlich orientierte Volumenbereiche auf.

Ein derartig konfigurierter Flüssigkristall streut, sofern die Abmessungen der einzelnen Flächen im Bereich der Lichtwellenlänge liegen, das einfallende Licht und ist also undurchsichtig. Wird ein elektrisches Feld angelegt, so werden die Flüssigkristallmoleküle aufgerichtet und lassen das Licht durch. Es ergibt sich somit ein einfacher elektrooptischer Schalter.

Optisch verhält sich diese Zelle ähnlich wie die ersten kommerziell erhältlichen Zellen aus der Anfangszeit der Flüssigkristalltechnik, die auf dem Effekt der dynamischen Streuung (DS) beruhten. Ebenso wie diese benötigt die vorliegende Zelle keine Polarisatoren. Im Unterschied zur DS-Zelle beruht die vorliegende Zelle aber auf einem echten Feldeffekt mit allen Vorteilen bezüglich Stromverbrauch, Lebensdauer etc.

Mit geeigneter Segmentierung der Ansteuerelektroden versehen, eignen sich solche Zellen gut für Projektionszwecke.

## Patentansprüche

1. Verfahren zur mikromechanischen Strukturierung einer Polymer-Orientierungsschicht, die sich auf einer Platte befindet, bei dem eine Polymer-Schicht zuerst durch Reiben in eine Vorzugsrichtung orientiert wird, dadurch gekennzeichnet, dass anschliessend mindestens ein Flächenbereich der orientierten Polymer-Schicht, von dem mindestens eine Seitenausdehnung in der Grössenordnung von 0.1 bis ca. 100 µm liegt, mechanisch mittels einer piezoelektrisch bewegten Schreibspitze mit einer Struktur aus parallel zueinander verlaufenden Vertiefungen versehen wird.

## Claims

1. A process for the micromechanical structuring of a polymer orientation layer on a plate wherein a polymer layer is first oriented in a preferred direction by friction, characterised in that thereafter at least one surface zone of the oriented polymer layer of which zone at least one lateral dimension is of the order of magnitude of from 0.1 to approximately 100 µm, is provided mechanically by means of a piezoelectrically moved stylus with a structure of recesses which extend parallel to one another.

## Revendications

1. Procédé pour la structuration micromécanique d'une couche de polymère d'orientation qui se trouve sur une plaque, dans lequel on oriente d'abord une couche de polymère par frottement dans une direction préférentielle, caractérisé en ce qu'ensuite au moins une zone de la surface de la couche de polymère orientée, présentant au moins une extension latérale de l'ordre de grandeur de 0,1 à environ 100 µm, est munie mécaniquement, au moyen d'une pointe d'écriture mue de manière piézoélectrique, d'une structure de cavités parallèles entre elles.
